# EUROPEAN PATENT APPLICATION

(11) **EP 4 756 943 A1**
(43) Date of publication of application: **10.06.2026**
(21) Application number: 24870935.4
(22) Date of filing: 27.09.2024
(51) Int. Cl.: H01M 8/1004, H01M 4/86, H01M 4/88, H01M 8/0245, H01M 8/1018, C25B 1/04, C25B 9/23, C25B 13/02, C25B 13/08

(54) **INTEGRATED MEMBRANE ELECTRODE FOR WATER ELECTROLYSIS AND FUEL CELL, AND PREPARATION METHOD**

(30) Priority: 28.09.2023 CN 202311275995
(71) Applicant: Dalian Institute of Chemical Physics, Chinese Academy of Sciences, Dalian, Liaoning 116023 (CN)
(72) Inventor: HAO, Jinkai, Dalian, Liaoning 116023 (CN); ZHANG, Hongjie, Dalian, Liaoning 116023 (CN); SHAO, Zhigang, Dalian, Liaoning 116023 (CN)
(74) Representative: Proi World Intellectual Property GmbH
(86) International application number: PCT/CN2024/121642
(87) International publication number: WO 2025/067397

(57) **Abstract**

An integrated membrane electrode for water electrolysis and a fuel cell, and a preparation method. The integrated membrane electrode comprises an enhanced proton exchange membrane, and a catalytic layer having high proton transmission efficiency. In a preparation process, a support body is subjected to compatibility modification treatment, then a coating process is used on two sides to prepare a proton exchange membrane compact layer and a catalytic layer, to implement integrated preparation of a membrane electrode CCM. A large quantity of nano-scale water-retaining functional particles are uniformly distributed in a reinforcing body and the catalytic layer of the prepared integrated membrane electrode, and the proton exchange membrane uses a short side chain resin. The configuration of the described structure can facilitate improvement of the mechanical strength of membrane electrode CCM, reduce thickness of the CCM, improve the electrical conductivity thereof, and simultaneously be compatible with membrane electrode performance requirements for water electrolysis and fuel cells in high and low temperatures and different humidity environments, hereby simplifying the preparation process.

## Description

### TECHNICAL FIELD

The present invention relates to an integrated membrane electrode for water electrolysis and fuel cells and a preparation method therefor, belonging to the technical field of fuel cell and water electrolysis membrane electrode materials.

### BACKGROUND ART

The global energy shortage problem is becoming increasingly severe. Traditional fossil fuels are non-renewable, and their utilization causes serious environmental pollution. However, the vast majority of energy conversion is achieved through heat engine processes, which have low conversion efficiency. The growing global energy consumption and the demand for 'energy conservation and emission reduction' serve as the primary drivers for the development of renewable energy sources. Hydrogen is regarded as an ideal energy carrier for the future energy society due to its advantages such as zero emissions and high energy density. Electrolytic water hydrogen production can not only help balance the load and manage peak and off-peak demands in smart power grids but also enable the widespread application of hydrogen in transportation vehicles, methane synthesis, and integration into natural gas supply networks, among other applications. In recent years, fuel cells have achieved significant advancements and have been practically applied in various fields. Fuel cells are not limited by the Carnot cycle, which offer high theoretical energy conversion efficiency. Fuel cells utilize hydrogen-rich substances such as hydrogen, methanol, and hydrocarbons as fuels, making them environmentally friendly. Therefore, proton exchange membrane fuel cell (PEMFC) hold broad prospects for application. Membrane electrodes serve as a critical component of fuel cells. Its primary manufacturing process involves coating catalyst ink onto a proton exchange membrane, followed by drying to form catalyst-coated membrane (CCM), which is then encapsulated to produce membrane electrodes. Proton exchange membrane water electrolysis (PEMWE) technology has garnered extensive research attention and is being scaled up for demonstration applications due to its advantages such as high current density, compact footprint, fast dynamic response, wide operational range, high purity of hydrogen production (up to 99.99%), and capability for high-pressure operation.

At present, both in fuel cells and PEM water electrolysis, increasing operating temperature is conducive to the improvement of membrane electrode performance. However, the perfluorosulfonic acid membranes and perfluorosulfonic acid resins in use are expensive and subject to technological monopolies. Additionally, they rely heavily on the presence of water for proton conduction, as a result, the conductivity and proton transport efficiency of membrane electrodes significantly decrease under low-humidity conditions. Therefore, current membrane electrodes are typically fabricated by separately preparing the proton exchange membrane and the CCM. Integrated membrane electrode manufacturing processes remain relatively scarce, and there are few preparation methods suitable for membrane electrode used in both PEM water electrolysis and fuel cells across a broad temperature range (60-150 °C) and a wide humidity range (RH 10-100 %).

Furthermore, in existing CCM manufacturing processes, surface uniformity of CCM has consistently been a key research focus in this field. Meanwhile, in this field, the cathode and anode of the CCM are primarily distinguished based on catalyst loading -i.e., the side with higher loading is designated as the cathode, and the side with lower loading as the anode. However, it is difficult to precisely control the loading level of catalysts in CCM production. Since the catalyst loadings on two sides of CCM are differ, parameters such as catalyst ink discharge amount, coating speed, and coating times require strict adjustment. Industrial machinery often lacks sensitivity to micro-adjustments, necessitating extensive experiments to establish a suitable manufacturing process capable of producing a CCM with uniform surface characteristics. On the other hand, during the CCM manufacturing process, due to the inherent fluidity of the catalyst ink, microscopic flow phenomenon may occur after it is coated onto the proton exchange membrane during the continuous transfer of the membrane, which will affect the uniformity of the coating surface. To reduce the flow of the catalyst ink, the concentration of the catalyst ink can be increased during its preparation. However, inks with higher concentrations exhibit poorer fluidity and greater surface tension, resulting in the persistence of more particles even after stirring. Coupled with the issue of weak adhesion of ink to the proton membrane surface, these issues lead to uniformity problems on the final CCM surfaces, such as particles, pinholes, and blemishes, which directly affect the CCM qualified rate.

### SUMMARY

To address the above-mentioned technical problems, the objective of the present invention is to provide an integrated membrane electrode for water electrolysis and fuel cells, and a preparation method therefor. The integrated membrane electrode includes a reinforced proton exchange membrane and a catalytic layer with high proton transport efficiency. The preparation process first involves compatibility modification of a support material, followed by employing a coating method to prepare a proton exchange membrane dense layer and a catalytic layer on both sides of the support material, achieving an integrated preparation of a CCM. In the integrated membrane electrode in the present invention, a large number of nano-scale water-retaining functional particles are uniformly distributed within both reinforcement layers and catalytic layers, and the proton exchange membrane employs short-side-chain resins. This structure contributes to enhancing the mechanical strength of CCM, reducing membrane thickness, improving conductivity, and simultaneously meeting performance requirements of membrane electrodes for water electrolysis and fuel cells under both high and low temperatures as well as various humidity conditions, while also simplifying the preparation process.

To achieve the above-mentioned objectives, the present invention adopts the following solutions:

The present invention provides a method for preparing an integrated membrane electrode for water electrolysis and fuel cells, including the following steps:
S1, Prepare a pretreated reinforcement layer: spray water-retaining nanoparticles and perfluorosulfonic acid resin dispersed in an alcohol-water solution onto a porous PTFE membrane, followed by drying to form a pretreated reinforcement layer.

S2, Coat a casting membrane slurry onto one side of a PE/PET protective film, and drying it at 60-90 °C for 10-60 s to form a wet membrane layer I in an incompletely dried state, with a wet thickness of 40-150 µm.

S3, Place the pretreated reinforcement layer obtained in step S1 flat onto the wet membrane layer I, then coat the casting membrane slurry onto the pretreated reinforcement layer, followed by drying at 60-90 °C for 10-200 s to form a wet membrane layer II in an incompletely dried state;
Repeat this step 1 to 10 times, with each wet membrane layer II controlled to be a wet thickness of 100-500 µm, to obtain a reinforced proton exchange membrane. In steps S2 and S3, the casting membrane slurry is an alcohol-water solution containing water-retaining nanoparticles and perfluorosulfonic acid resin.

S4, Coat a catalyst ink I onto the wet membrane layer II of the reinforced proton exchange membrane obtained in step S3, wherein the catalyst ink I includes water-retaining nanoparticles and a catalyst, with a catalyst loading of 0.2-3 mg/cm².

S5, Peel off a membrane obtained in step S4 from the PE/PET protective film, coat a catalyst ink II onto the wet membrane layer I, followed by dying to obtain a CCM. The catalyst ink II includes water-retaining nanoparticles and a catalyst, with a catalyst loading of 0.2-1 mg/cm².

S6, Perform hot-pressing encapsulation on the CCM obtained in step S5 to form the integrated membrane electrode for water electrolysis and fuel cells.

Further, in the aforementioned technical solution:
In step S1, a thickness of the porous PTFE membrane is 1-10 µm and a porosity is 40-85 %. A mass ratio of the water-retaining nanoparticles to the perfluorosulfonic acid resin is 1:1-5, and a spraying loading is 1-10 mg/cm². A drying temperature to obtain the pretreated reinforcement layer is 40-60 °C.

In step S2, the PE/PET protective film is placed flat on a vacuum adsorption coating platform at 40-80 °C. A slurry coating speed is 0.1-5 cm/s.

In step S3, a slurry coating speed is 0.1-5 cm/s.

In step S4, the catalyst in the catalyst ink I is one selected from Pt-based and Ir-based catalysts, a mass ratio of the water-retaining nanoparticles to the catalyst is 1:5-20, with a dispersion agent of an alcohol-water solution. A coating speed is 0.5-5 mm/s, and a coating temperature is 40-90 °C. A concentration of the alcohol-water solution is 1-20 g/L.

In step S5, the catalyst in the catalyst ink II is one selected from Pt-based precious metal catalysts and Pt-based non-precious metal catalysts, a mass ratio of the water-retaining nanoparticles to the catalyst is 1:5-20, with a dispersion agent of an alcohol-water solution. A coating speed is 0.5-5 mm/s, and a coating temperature is 40-90 °C. A concentration of the alcohol-water solution is 1-20 g/L.

In step S6, the CCM obtained in step S5 is subject to hot-pressing encapsulation with a gas diffusion layer and a polyester frame to form the integrated membrane electrode, with a hot-pressing temperature of 70-150 °C.

Further, in the aforementioned solutions, in steps S1 to S6, the water-retaining nanoparticles are at least one of TiO₂, ZSM5, and ZSM35 molecular sieves, with a particle size of 1-20 nm.

Further, in the aforementioned solutions, in steps S2 and S3, a mass ratio of the water-retaining nanoparticles to the perfluorosulfonic acid resin in the casting membrane slurry is 1: 10-200, and a concentration of the perfluorosulfonic acid resin is 2-10 wt%.

Further, in the aforementioned solutions, the alcohol in the alcohol-water solution is independently selected from at least one of ethanol, n-propanol, isopropanol, methanol, and n-butanol.

Further, in the aforementioned solutions, the perfluorosulfonic acid resin is a long-side-chain resin or a short-side-chain perfluorosulfonic acid resin. The short-side-chain perfluorosulfonic acid resin has a molecular structure selected from at least one of

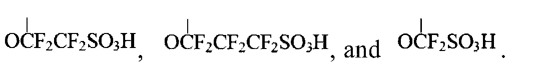

The present invention also provides an integrated membrane electrode for water electrolysis and fuel cells obtained by the above-mentioned preparation methods.

The present invention further provides an application of the above-mentioned integrated membrane electrode as a membrane electrode in water electrolyzers or fuel cells.

Further, in the aforementioned solutions, the fuel cell is a high-temperature proton exchange membrane fuel cell operating at 100-150 °C in an anhydrous system and low-humidity inlet gas. The water electrolyzer is a high-temperature PEM electrolyzer.

Compared with the prior art, the present invention has the following beneficial effects:
1. The present invention integrates the preparation processes of the proton exchange membrane and the membrane electrode catalytic layer into a unified preparation processes, which helps to flexibly adjust the formulations of perfluorosulfonic acid resin and catalyst both within the proton exchange membrane and in the catalytic layer, avoiding issues such as interface resistance and low proton transport efficiency arose from differences in processes or structures between the membrane and the catalytic layer.
2. The integrated membrane electrode provided in the present invention is suitable for PEM water electrolysis and fuel cells operating across a wide temperature range (60-150 °C) and a broad humidity range (RH 10-100%). By incorporating water-retaining nanoparticles simultaneously within both the membrane and the catalytic layer, the proton transport capacity of the membrane and the catalytic layer under high-temperature and low-humidity conditions can be effectively improved, thereby enhancing the output power of the membrane electrode.
3. In the present invention, the PTFE porous membrane used for mechanical strength is subject to pretreatment. A spray process is employed to fill the surface and interior of the PTFE with perfluorosulfonic acid resin containing a high proportion of molecular sieves, which not only enhances the mechanical strength of the reinforcement layer but also improves its ability to retain and adsorb more water molecules, forming abundant proton transport groups within the pores. Additionally, the addition of perfluorosulfonic acid resin effectively improves the interfacial compatibility between the resin and the PTFE surface and pores, and improves the compactness of the membrane in thickness direction.
4. In the present invention, by pretreating the PTFE, the interfacial compatibility of the resin with the surface and pores of PTFE is improved, which contributes to the hydrogen permeability of a thickness-reduced membrane. This pretreatment allows a reduction in the thickness of membrane materials currently used for PEM water electrolysis.
5. The present invention utilizes water-retaining agents such as molecular sieves and incorporates them into the reinforcement layer of the membrane, the membrane body, and the catalytic layer. Uniform-distributed water-retaining agents across this multi-layered structure can effectively improve the conductivity of the membrane and the proton transport efficiency of the catalytic layer under high-temperature and low-humidity conditions.
6. The present invention adopts an integrated coating process, which is more suitable for mass production compared to spraying process, contributing to cost reduction. It effectively achieves a "low-cost, high-efficiency, non-destructive" preparation and operation mode, thereby enabling fuel cells or electrolyzers to function more rapidly, safely, and with higher performance.

### DETAILED DESCRIPTION OF THE EMBODIMENTS

The following is a further description of the present invention in conjunction with embodiments, and do not limit the present invention in any way.

### Example 1

A short-side-chain perfluorosulfonic acid resin was employed in this example, with its short-side-chain molecular structure being

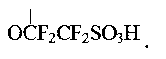

S1. Preparation of a pretreated reinforcement layer: a spray coater was used to spray water-retaining nanoparticles and perfluorosulfonic acid resin dispersed in an alcohol-water solution onto a porous PTFE membrane with a thickness of 1 µm and a porosity of 40%, and then dried it at 40 °C, and a pretreated reinforcement layer was obtained. A mass ratio of the water-retaining nanoparticles to the perfluorosulfonic acid resin was 1:1, and a spraying loading was 1 mg/cm².

Preparation of a casting membrane slurry used in steps S2 and S3: 1 g of 1 nm TiO₂ water-retaining nanoparticles and 10 g of perfluorosulfonic acid resin were dispersed in an ethanol-water solution, with an ethanol concentration of 10 wt% and a perfluorosulfonic acid resin concentration of 2 wt%.

S2: A PE protective film was placed flat on a vacuum adsorption coating platform set at 40 °C. The casting membrane slurry was coated onto the protective film, followed by drying at 60 °C for 10 s to form a wet membrane layer, with a wet thickness of 40 µm. A slurry coating speed was 0.1 cm/s.

S3: The pretreated reinforcement layer was placed flat onto the wet membrane layer, and then the casting membrane slurry was coated onto the pretreated reinforcement layer, followed by drying at 60 °C for 10 s to form another wet membrane layer, with a wet thickness of 100 µm. A slurry coating speed was 0.1 cm/s. This step was repeated once to obtain a reinforced proton exchange membrane with a thickness of 10 µm.

S4: A catalyst ink I, containing TiO₂ water-retaining nanoparticles and a catalyst, was coated onto the reinforced proton exchange membrane obtained in step S3, with a coating speed of 0.5 mm/s, a coating temperature of 40 °C, and a catalyst loading of 0.2 mg/cm². A membrane was then obtained after drying. The catalyst ink I was prepared as follows: 1 g of 1 nm TiO₂ water-retaining nanoparticles and 5 g of Pt/C catalyst were added to an ethanol-water solution, with an ethanol concentration of 1 g/L.

S5: The membrane obtained in step S4 was peeled off from the PE protective film and directly adhered to the vacuum platform, and a catalyst ink II, containing water-retaining nanoparticles and a catalyst, was coated onto the wet membrane layer obtained in step S2 (from where the protective film was peeled off), with a coating speed of 0.5 mm/s, a coating temperature of 40 °C, and a catalyst loading of 0.2 mg/cm². A CCM was then obtained after drying. The catalyst ink II was prepared as follows: 1 g of 1 nm TiO₂ water-retaining nanoparticles and 5 g of catalyst containing Pt/C (with a Pt loading of 20 wt%) and platinum black were added to an ethanol-water solution, with an ethanol concentration of 1 g/L.

S6. The CCM, gas diffusion layers, and polyester frame were encapsulated by hot-pressing at 70 °C to obtain a membrane electrode, resulting in an integrated membrane electrode for water electrolysis and fuel cells.

### Example 2

A long-side-chain perfluorosulfonic acid resin was employed in this example.

S1. Preparation of a pretreated reinforcement layer: a spray coater was used to spray water-retaining nanoparticles and perfluorosulfonic acid resin dispersed in an alcohol-water solution into a porous PTFE membrane with a thickness of 10 µm and a porosity of 85%, and then dried it at 60 °C, and a pretreated reinforcement layer was obtained. A mass ratio of the water-retaining nanoparticles to the perfluorosulfonic acid resin was 1:5, and a spraying loading was 10 mg/cm².

Preparation of a casting membrane slurry used in steps S2 and S3: 1 g of 20 nm ZSM35 water-retaining nanoparticles and 200 g of perfluorosulfonic acid resin were dispersed in a n-propanol-water solution, with a n-propanol concentration of 90 wt% and a perfluorosulfonic acid resin concentration of 10 wt%.

S2: A PET protective film was placed flat on a vacuum adsorption coating platform set at 80 °C. The casting membrane slurry was coated onto the protective film, followed by drying at 90 °C for 60 s to form a wet membrane layer, with a wet thickness of 150 µm. A slurry coating speed was 5 cm/s.

S3: The pretreated reinforcement layer was placed flat onto the wet membrane layer, and then the casting membrane slurry was coated onto the pretreated reinforcement layer, followed by drying at 90 °C for 200 s to form another wet membrane layer, with a wet thickness of 500 µm. A slurry coating speed was 5 cm/s. This step was repeated 10 times to obtain a reinforced proton exchange membrane with a thickness of 100 µm.

S4: A catalyst ink I, containing ZSM35 water-retaining nanoparticles and a catalyst, was coated onto the reinforced proton exchange membrane obtained in step S3, with a coating speed of 0.5 mm/s, a coating temperature of 90 °C, and a catalyst loading of 3 mg/cm². A membrane was then obtained after drying. The catalyst ink I was prepared as follows: 1 g of 20 nm ZSM35 water-retaining nanoparticles and 20 g of iridium black catalyst were added to a n-propanol-water solution, with a n-propanol concentration of 20 g/L.

S5: The membrane obtained in step S4 was peeled off from the protective film and directly adhered to the vacuum platform, and a catalyst ink II, containing water-retaining nanoparticles and a catalyst, was coated onto the wet membrane layer obtained in step S2 (from where the protective film was peeled off), with a coating speed of 5 mm/s, a coating temperature of 90 °C, and a catalyst loading of 1 mg/cm². A CCM was then obtained after drying. The catalyst ink II was prepared as follows: 1 g of 20 nm ZSM35 water-retaining nanoparticles and 20 g of Pt/C (with a Pt loading of 90 wt%) catalyst were added to a n-propanol-water solution, with a n-propanol concentration of 1-20 g/L.

S6. The CCM, gas diffusion layers, and polyester frame were encapsulated by hot-pressing at 150 °C to obtain a membrane electrode, resulting in an integrated membrane electrode for water electrolysis and fuel cells.

### Example 3

A short-side-chain perfluorosulfonic acid resin was employed in this example, with its short-side-chain molecular structure being

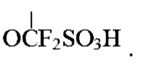

S1. Preparation of a pretreated reinforcement layer: a spray coater was used to spray water-retaining nanoparticles and perfluorosulfonic acid resin dispersed in an alcohol-water solution into a porous PTFE membrane with a thickness of 5 µm and a porosity of 55%, and then dried it at 50 °C, and a pretreated reinforcement layer was obtained. A mass ratio of the water-retaining nanoparticles to the perfluorosulfonic acid resin was 1:2, and a spraying loading was 2 mg/cm².

Preparation of a casting membrane slurry used in steps S2 and S3: 1 g of 10 nm ZSM5 water-retaining nanoparticles and 100 g of perfluorosulfonic acid resin were dispersed in a isopropanol-water solution, with an isopropanol concentration of 50 wt% and a perfluorosulfonic acid resin concentration of 60 wt%.

S2: A PET protective film was placed flat on a vacuum adsorption coating platform set at 60 °C. The casting membrane slurry was coated onto the protective film, followed by drying at 70 °C for 40 s to form a wet membrane layer, with a wet thickness of 100 µm. A slurry coating speed was 3 cm/s.

S3: The pretreated reinforcement layer was placed flat onto the wet membrane layer, and then the casting membrane slurry was coated onto the pretreated reinforcement layer, followed by drying at 70 °C for 100 s to form another wet membrane layer, with a wet thickness of 300 µm. A slurry coating speed was 3 cm/s. This step was repeated 5 times to obtain a reinforced proton exchange membrane with a thickness of 50 µm.

S4: A catalyst ink I, containing ZSM5 water-retaining nanoparticles and a catalyst, was coated onto the reinforced proton exchange membrane obtained in step S3, with a coating speed of 3 mm/s, a coating temperature of 50 °C, and a catalyst loading of 1 mg/cm². A membrane was then obtained after drying. The catalyst ink I was prepared as follows: 1 g of 10 nm ZSM5 water-retaining nanoparticles and 20 g of platinum black catalyst were added to a isopropanol-water solution, with an isopropanol concentration of 10 g/L.

S5: The membrane obtained in step S4 was peeled off from the protective film and directly adhered to the vacuum platform, and a catalyst ink II, containing water-retaining nanoparticles and a catalyst, was coated onto the wet membrane layer obtained in step S2 (from where the protective film was peeled off), with a coating speed of 2.5 mm/s, a coating temperature of 50 °C, and a catalyst loading of 0.8 mg/cm². A CCM was then obtained after drying. The catalyst ink II was prepared as follows: 1 g of 10 nm ZSM5 water-retaining nanoparticles and 10 g of Pt/C (with a Pt loading of 70 wt%) catalyst were added to an isopropanol-water solution, with an isopropanol concentration of 10 g/L.

S6. The CCM, gas diffusion layers, and polyester frame were encapsulated by hot-pressing at 90 °C to obtain a membrane electrode, resulting in an integrated membrane electrode for water electrolysis and fuel cells.

### Example 4

A short-side-chain perfluorosulfonic acid resin was employed in this example, with its short-side-chain molecular structure being

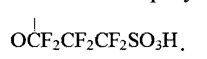

S1. Preparation of a pretreated reinforcement layer: a spray coater was used to spray water-retaining nanoparticles and perfluorosulfonic acid resin dispersed in an alcohol-water solution into a porous PTFE membrane with a thickness of 7 µm and a porosity of 7%, and then dried it at 50 °C, and a pretreated reinforcement layer was obtained. A mass ratio of the water-retaining nanoparticles to the perfluorosulfonic acid resin was 1:3, and a spraying loading was 70 mg/cm².

Preparation of a casting membrane slurry used in steps S2 and S3: 1 g of 10 nm TiO₂ water-retaining nanoparticles and 50 g of perfluorosulfonic acid resin were dispersed in a n-propanol-water solution, with a n-propanol concentration of 10-90 wt% and a perfluorosulfonic acid resin concentration of 10 wt%.

S2: A PET protective film was placed flat on a vacuum adsorption coating platform set at 50 °C. The casting membrane slurry was coated onto the protective film, followed by drying at 70 °C for 50 s to form a wet membrane layer, with a wet thickness of 90 µm. A slurry coating speed was 3 cm/s.

S3: The pretreated reinforcement layer was placed flat onto the wet membrane layer, and then the casting membrane slurry was coated onto the pretreated reinforcement layer, followed by drying at 90 °C for 200 s to form another wet membrane layer, with a wet thickness of 400 µm. A slurry coating speed was 5 cm/s. This step was repeated 10 times to obtain a reinforced proton exchange membrane with a thickness of 100 µm.

S4: A catalyst ink I, containing ZSM35 water-retaining nanoparticles and a catalyst, was coated onto the reinforced proton exchange membrane obtained in step S3, with a coating speed of 0.5 mm/s, a coating temperature of 90 °C, and a catalyst loading of 3 mg/cm². A membrane was then obtained after drying. The catalyst ink I was prepared as follows: 1 g of 20 nm ZSM35 water-retaining nanoparticles and 20 g of iridium black catalyst were added to a n-propanol-water solution, with a n-propanol concentration of 20 g/L.

S5: The membrane obtained in step S4 was peeled off from the protective film and directly adhered to the vacuum platform, and a catalyst ink II, containing water-retaining nanoparticles and a catalyst, was coated onto the wet membrane layer obtained in step S2 (from where the protective film was peeled off), with a coating speed of 5 mm/s, a coating temperature of 90 °C, and a catalyst loading of 1 mg/cm². A CCM was then obtained after drying. The catalyst ink II was prepared as follows: 1 g of 20 nm ZSM35 water-retaining nanoparticles and 20 g of Pt/C (with a Pt loading of 90 wt%) catalyst were added to a n-propanol-water solution, with a n-propanol concentration of 1-20 g/L.

S6. The CCM, gas diffusion layers, and polyester frame were encapsulated by hot-pressing at 150 °C to obtain a membrane electrode, resulting in an integrated membrane electrode for water electrolysis and fuel cells.

### Example 5

A short-side-chain perfluorosulfonic acid resin was employed in this example, with its short-side-chain molecular structure being

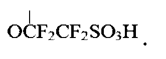

S1. Preparation of the pretreated reinforcement layer: a spray coater was used to spray water-retaining nanoparticles and perfluorosulfonic acid resin dispersed in an alcohol-water solution into a porous PTFE membrane with a thickness of 1 µm and a porosity of 40%, and then dried it at 50 °C, and a pretreated reinforcement layer was obtained. A mass ratio of the water-retaining nanoparticles to the perfluorosulfonic acid resin was 1:3, and a spraying loading was 70 mg/cm².

Preparation of a casting membrane slurry used in steps S2 and S3: 1 g of 10 nm TiO₂ water-retaining nanoparticles and 50 g of perfluorosulfonic acid resin were dispersed in a n-propanol-water solution, with a n-propanol concentration of 10 wt% and a perfluorosulfonic acid resin concentration of 5 wt%.

S2: A PET protective film was placed flat on a vacuum adsorption coating platform set at 50 °C. The casting membrane slurry was coated onto the protective film, followed by drying at 70 °C for 50 s to form a wet membrane layer, with a wet thickness of 90 µm. A slurry coating speed was 3 cm/s.

S3: The pretreated reinforcement layer was placed flat onto the wet membrane layer, and then the casting membrane slurry was coated onto the pretreated reinforcement layer, followed by drying at 90 °C for 200 s to form another wet membrane layer, with a wet thickness of 400 µm. A slurry coating speed was 5 cm/s. This step was repeated 10 times to obtain a reinforced proton exchange membrane with a thickness of 100 µm.

S4: A catalyst ink I, containing ZSM35 water-retaining nanoparticles and a catalyst, was coated onto the reinforced proton exchange membrane obtained in step S3, with a coating speed of 0.5 mm/s, a coating temperature of 60 °C, and a catalyst loading of 1 mg/cm². A membrane was then obtained after drying. The catalyst ink I was prepared as follows: 1 g of 20 nm ZSM35 water-retaining nanoparticles and 20 g of iridium black catalyst were added to a n-propanol-water solution, with a n-propanol concentration of 20 g/L.

S5: The membrane obtained in step S4 was peeled off from the protective film and directly adhered to the vacuum platform, and a catalyst ink II, containing water-retaining nanoparticles and a catalyst, was coated onto the wet membrane layer obtained in step S2 (from where the protective film was peeled off), with a coating speed of 3.5 mm/s, a coating temperature of 70 °C, and a catalyst loading of 1 mg/cm². A CCM was then obtained after drying. The catalyst ink II was prepared as follows: 1 g of 20 nm ZSM35 water-retaining nanoparticles and 20 g of Pt/C (with a Pt loading of 90 wt%) catalyst were added to a n-propanol-water solution, with a n-propanol concentration of 1-20 g/L.

S6. The CCM, gas diffusion layers, and polyester frame were encapsulated by hot-pressing at 120 °C to obtain a membrane electrode, resulting in an integrated membrane electrode for water electrolysis and fuel cells.

### Comparative Example 1: Without using PTFE as the reinforcement layer.

A short-side-chain perfluorosulfonic acid resin was employed in this example, with its short-side-chain molecular structure being

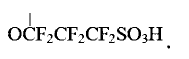

S1: Preparation of a casting membrane slurry: 1g of 1 nm TiO₂ water-retaining nanoparticles and 10 g of perfluorosulfonic acid resin were dispersed in an ethanol-water solution, with an ethanol concentration of 10 wt% and a perfluorosulfonic acid resin concentration of 2 wt%.

S2: A PE protective film was placed flat onto a vacuum adsorption coating platform set at 40 °C. The casting membrane slurry was coated onto the protective film, followed by drying at 60 °C for 10 s to form a wet membrane layer, with a wet thickness of 40 µm. A slurry coating speed was 0.1 cm/s.

S3: The casting membrane slurry was coated onto the wet membrane layer, followed by drying at 60 °C for 10 s to form another wet membrane layer, with a wet thickness of 100 µm. A slurry coating speed was 0.1 cm/s. This step was repeated once to obtain a proton exchange membrane with a thickness of 10 µm.

S4: A catalyst ink I, containing TiO₂ water-retaining nanoparticles and a catalyst, was coated onto the proton exchange membrane obtained in step S3, with a coating speed of 0.5 mm/s, a coating temperature of 40 °C, and a catalyst loading of 0.2 mg/cm². A membrane was then obtained after drying. The catalyst ink I was prepared as follows: 1 g of 1 nm TiO₂ water-retaining nanoparticles and 5 g of Pt/C catalyst were added to an ethanol-water solution, with an ethanol concentration of 1 g/L.

S5: The membrane obtained in step S4 was peeled off from the protective film and directly adhered to the vacuum platform, and a catalyst ink II was coated onto the membrane, with a coating speed of 0.5 mm/s, a coating temperature of 40 °C, and a catalyst loading of 0.2 mg/cm². A CCM was then obtained after drying. The catalyst ink II was prepared as follows: 1 g of 1 nm TiO₂ water-retaining nanoparticles and 5 g of catalyst containing Pt/C (with a Pt loading of 20 wt%) and platinum black were added to an ethanol-water solution, with an ethanol concentration of 1 g/L.

S6. The CCM, gas diffusion layers, and polyester frame were encapsulated by hot-pressing at 70 °C to obtain a membrane electrode, resulting in an integrated membrane electrode for water electrolysis and fuel cells.

### Comparative Example 2: PTFE was used as a reinforcement layer without any additional modifications, and no water-retaining agents were added to casting membrane slurry.

A short-side-chain perfluorosulfonic acid resin was employed in this example, with its short-side-chain molecular structure being

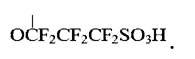

S1: PTFE was used as a reinforcement layer without any additional modifications.

S2: A PE protective film was placed flat on a vacuum adsorption coating platform set at 40 °C. A perfluorosulfonic acid resin casting membrane slurry was coated onto the protective film, followed by drying at 60 °C for 10 s to form a wet membrane layer, with a wet thickness of 40 µm. A slurry coating speed was 0.1 cm/s.

S3: The PTFE reinforcement layer was placed flat onto the wet membrane layer, and then the perfluorosulfonic acid resin casting membrane slurry was coated onto the PTFE reinforcement layer, followed by drying at 60 °C for 10 s to form another wet membrane layer, with a wet thickness of 100 µm. A slurry coating speed was 0.1 cm/s. This step was repeated once to obtain a reinforced proton exchange membrane with a thickness of 10 µm.

S4: A catalyst ink I, containing TiO₂ water-retaining nanoparticles and a catalyst, was coated onto the reinforced proton exchange membrane obtained in step S3, with a coating speed of 0.5 mm/s, a coating temperature of 40 °C, and a catalyst loading of 0.2 mg/cm². A membrane was then obtained after drying. The catalyst ink I was prepared as follows: 1 g of 1 nm TiO₂ water-retaining nanoparticles and 5 g of Pt/C catalyst were added to an ethanol-water solution, with an ethanol concentration of 1 g/L.

S5: The membrane obtained in step S4 was peeled off from the protective film and directly adhered to the vacuum platform, and a catalyst ink II was coated onto the membrane, with a coating speed of 0.5 mm/s, a coating temperature of 40 °C, and a catalyst loading of 0.2 mg/cm². A CCM was then obtained after drying. The catalyst ink II was prepared as follows: 1 g of 1 nm TiO₂ water-retaining nanoparticles and 5 g of catalyst containing Pt/C (with a Pt loading of 20 wt%) and platinum black were added to an ethanol-water solution, with an ethanol concentration of 1 g/L.
S6. The CCM, gas diffusion layers, and polyester frame were encapsulated by hot-pressing at 70 °C to obtain a membrane electrode, resulting in an integrated membrane electrode for water electrolysis and fuel cells.

### Comparative Example 3: The pre-treated PTFE was used as a reinforcement layer, and no water-retaining agents were added to casting membrane slurry.

A short-side-chain perfluorosulfonic acid resin was employed in this example, with its short-side-chain molecular structure being

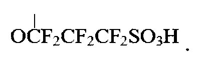

S1. Preparation of a pretreated reinforcement layer: a spray coater was used to spray perfluorosulfonic acid resin dispersed in an alcohol-water solution into a porous PTFE membrane with a thickness of 1 µm and a porosity of 40%, and then dried it at 40 °C, and a pretreated reinforcement layer was obtained. A spraying loading was 1 mg/cm².

Preparation of a casting membrane slurry used in steps S2 and S3: 10-200 g of perfluorosulfonic acid resin were dispersed in an ethanol-water solution, with an ethanol concentration of 10 wt% and a perfluorosulfonic acid resin concentration of 2 wt%.

S2: A PE protective film was placed flat oton a vacuum adsorption coating platform set at 40 °C. The casting membrane slurry was coated onto the protective film, followed by drying at 60 °C for 10 s to form a wet membrane layer, with a wet thickness of 40 µm. A slurry coating speed was 0.1 cm/s.

S3: The pretreated reinforcement layer was placed flat on the wet membrane layer, and then the casting membrane slurry was coated onto the pretreated reinforcement layer, followed by drying at 60 °C for 10 s to form another wet membrane layer, with a wet thickness of 100 µm. A slurry coating speed was 0.1 cm/s. This step was repeated once to obtain a reinforced proton exchange membrane with a thickness of 10 µm.

S4: A catalyst ink I, containing TiO₂ water-retaining nanoparticles and a catalyst, was coated onto the reinforced proton exchange membrane obtained in step S3, with a coating speed of 0.5 mm/s, a coating temperature of 40 °C, and a catalyst loading of 0.2 mg/cm². A membrane was then obtained after drying. The catalyst ink I was prepared as follows: 1 g of 1 nm TiO₂ water-retaining nanoparticles and 5 g of Pt/C catalyst were added to an ethanol-water solution, with an ethanol concentration of 1 g/L.

S5: The membrane obtained in step S4 was peeled off from the PE protective film and directly adhered to the vacuum platform, and a catalyst ink II was coated onto the membrane, with a coating speed of 0.5 mm/s, a coating temperature of 40 °C, and a catalyst loading of 0.2 mg/cm². A CCM was then obtained after drying. The catalyst ink II was prepared as follows: 1 g of 1 nm TiO₂ water-retaining nanoparticles and 5 g of catalyst containing Pt/C (with a Pt loading of 20 wt%) and platinum black were added to an ethanol-water solution, with an ethanol concentration of 1 g/L.
S6. The CCM, gas diffusion layers, and polyester frame were encapsulated by hot-pressing at 70 °C to obtain a membrane electrode, resulting in an integrated membrane electrode for water electrolysis and fuel cells.

### Comparative Example 4: PTFE was used as a reinforcement layer, and no water-retaining agents were added to either membrane or catalytic layer.

A short-side-chain perfluorosulfonic acid resin was employed in this example, with its short-side-chain molecular structure being 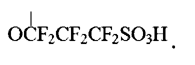 .

S1. Preparation of a pretreated reinforcement layer: a spray coater was used to spray water-retaining nanoparticles and perfluorosulfonic acid resin dispersed in an alcohol-water solution into a porous PTFE membrane with a thickness of 1 µm and a porosity of 40%, and then dried it at 40 °C and a pretreated reinforcement layer was obtained. .A mass ratio of the water-retaining nanoparticles to the perfluorosulfonic acid resin was 1:1, and a spraying loading was 1 mg/cm².

Preparation of a casting membrane slurry used in steps S2 and S3: 10 g of perfluorosulfonic acid resin were dispersed in an ethanol-water solution, with an ethanol concentration of 10 wt% and a perfluorosulfonic acid resin concentration of 2 wt%.

S2: A PE protective film was placed flat onto a vacuum adsorption coating platform set at 40 °C. The casting membrane slurry was coated onto the protective film, followed by drying at 60 °C for 10 s to form a wet membrane layer, with a wet thickness of 40 µm. A slurry coating speed was 0.1 cm/s.

S3: The pretreated reinforcement layer was placed flat onto the wet membrane layer, and then the casting membrane slurry was coated onto the pretreated reinforcement layer, followed by drying at 60 °C for 10 s to form another wet membrane layer, with a wet thickness of 100 µm. A slurry coating speed was 0.1 cm/s. This step was repeated once to obtain a reinforced proton exchange membrane with a thickness of 10 µm.

S4: A catalyst ink I containing a catalyst was coated onto the reinforced proton exchange membrane obtained in step S3, with a coating speed of 0.5 mm/s, a coating temperature of 40 °C, and a catalyst loading of 0.2 mg/cm². A membrane was then obtained after drying. The catalyst ink I was prepared as follows: 5 g of Pt/C catalyst were added to an ethanol-water solution, with an ethanol concentration of 1 g/L.

S5: The membrane obtained in step S4 was peeled off from the protective film and directly adhered to the vacuum platform, and a catalyst ink II was coated onto the membrane, with a coating speed of 0.5 mm/s, a coating temperature of 40 °C, and a catalyst loading of 0.2 mg/cm². A CCM was then obtained after drying. The catalyst ink II was prepared as follows: 5 g of catalyst containing Pt/C (with a Pt loading of 20 wt%) and platinum black were added to an ethanol-water solution, with an ethanol concentration of 1 g/L.

S6. The CCM, gas diffusion layers, and polyester frame were encapsulated by hot-pressing at 70 °C to obtain a membrane electrode, resulting in an integrated membrane electrode for water electrolysis and fuel cells.

### Comparative Example 5: A commercial membrane was used as the proton exchange membrane, and a catalytic layer was directly coated on it without the addition of water-retaining agents.

A short-side-chain perfluorosulfonic acid resin was employed in this example, with its short-side-chain molecular structure being 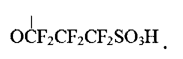 .

A catalyst ink I containing a catalyst was coated onto the reinforced proton exchange membrane obtained in step S3, with a coating speed of 0.5 mm/s, a coating temperature of 40 °C, and a catalyst loading of 0.2 mg/cm². A membrane was then obtained after drying. The catalyst ink I was prepared as follows: 5 g of Pt/C catalyst were added to an ethanol-water solution, with an ethanol concentration of 1 g/L.

The membrane obtained in step S4 was peeled off from the protective film and directly adhered to the vacuum platform, and a catalyst ink II was coated onto the membrane, with a coating speed of 0.5 mm/s, a coating temperature of 40 °C, and a catalyst loading of 0.2 mg/cm². A CCM was then obtained after drying. The catalyst ink II was prepared as follows: 5 g of catalyst containing Pt/C (with a Pt loading of 20 wt%) and platinum black were added to an ethanol-water solution, with an ethanol concentration of 1 g/L.

The CCM, gas diffusion layers, and polyester frame were encapsulated by hot-pressing at 70 °C to obtain a membrane electrode, resulting in an integrated membrane electrode for water electrolysis and fuel cells.

The mechanical strength, conductivity, electrolysis performance, fuel cell performance, and hydrogen permeability of the membrane electrodes prepared in the examples and comparative examples were tested. The conductivity tests were conducted under conditions of 120 °C and 40 % humidity, as well as 100 °C and 30 % humidity. The tensile strength was measured according to the Chinese national standard GB/T20042.3-2009. The hydrogen permeation current was tested using an electrochemical method.

In Comparative Example 1, no PTFE was used as the reinforcement layer. The mechanical strength is significantly reduced, indicating that the reinforcement layer used in the present invention effectively improved the mechanical strength of the membrane electrode.

In Comparative Example 2, PTFE was used as the reinforcement layer, and the resin was directly coated onto the reinforcement layer without spraying water-retaining agent into it. The results show that the improvement in mechanical strength of the membrane electrode was limited when resin was not sprayed to the reinforcement layer.

In Comparative Example 3, PTFE was used as the reinforcement layer, and the perfluorosulfonic acid resin was applied using a spray method without adding any water-retaining agents, but a water-retaining agent was added to the catalytic layer. The results show that the spray method improved the interfacial compatibility of the reinforcement layer surface to some extent, while the mechanical strength was maintained. However, the membrane electrode exhibited poor water retention capacity under low-humidity conditions, leading to reduced conductivity. Nevertheless, by incorporating water-retaining agents into the catalytic layer, the membrane electrode exhibited better performance compared to Comparative Example 2.

In Comparative Example 4, PTFE was used as the reinforcement layer, and no water-retaining agents were added to either the membrane or the catalytic layer. The results indicate that the membrane electrode exhibited an improved mechanical strength, while the water-retaining capacity under low-humidity conditions was poor, leading to low conductivity and inferiorcell performance.

In Comparative Example 5, a commercial membrane was used as the proton exchange membrane, and the catalytic layer was directly coated onto it without adding water-retaining agents. The results indicate that the coating process severely damaged the membrane during preparation, leading to the poorest mechanical strength and the lowest cell performance among all tested samples.

**Table 1 Performances of membrane electrode**

| Embodiment | Conductivity under low-humidity conditions, -90°C, mS . cm⁻¹ | Tensile strength, MPa | Hydrogen permeation current, mA cm⁻² | Single-cell performance of fuel cells, V@2Acm⁻² | PEM electrolyzer performance, @2Acm⁻² |
|---|---|---|---|---|---|
| Example 1 | 211 | 43 | 1 | 0.7 | 1.8 |
| Example2 | 223 | 41 | 1 | 0.69 | 1.7 |
| Example3 | 243 | 45 | 2 | 0.68 | 1.7 |
| Example4 | 231 | 66 | 1 | 0.68 | 1.6 |
| Example5 | 219 | 42 | 1 | 0.68 | 1.8 |
| Comparative Example1 | 100 | 5 | 1 | 0.53 | 2.5 |
| Comparative Example2 | 120 | 21 | 10 | 0.59 | 2.0 |
| Comparative Example3 | 80 | 10 | 7 | 0.55 | 2.4 |
| Comparative Example4 | 70 | 33 | 8 | 0.54 | 2.4 |
| Comparative Example5 | 78 | 34 | 9 | 0.69 | 2.5 |

These examples are merely explanations of the present invention, and do not limit the present invention in any way. After reading the specification, those skilled in the art may make modifications to the examples without inventive contributions based on their needs. As long as the modifications remain within the scope of the claims of the present invention, they are protected by the present invention.

## Claims

1. A method for preparing an integrated membrane electrode for water electrolysis and fuel cells, **characterized by** comprising the following steps of:
S1: spraying water-retaining nanoparticles and perfluorosulfonic acid resin dispersed in an alcohol-water solution into a porous PTFE membrane, followed by drying to form a pretreated reinforcement layer;
S2: coating a casting membrane slurry onto one side of a PE/PET protective film, and drying it at 60-90 °C for 10-60 s to form a wet membrane layer I in an incompletely dried state, with a wet thickness of 40-150 µm;
S3: placing one side of the pretreated reinforcement layer obtained in step S1 flat onto the wet membrane layer I, then coating the casting membrane slurry onto the other side of the pretreated reinforcement layer, followed by drying at 60-90 °C for 10-200 s to form a wet membrane layer II in an incompletely dried state;
repeating this step 1 to 10 times, with each wet membrane layer II controlled to be a wet thickness of 100-500 µm, to obtain a reinforced proton exchange membrane;
wherein in steps S2 and S3, the casting membrane slurry is an alcohol-water solution containing water-retaining nanoparticles and perfluorosulfonic acid resin;
S4: coating a catalyst ink I onto the wet membrane layer II of the reinforced proton exchange membrane obtained in step S3, wherein the catalyst ink I comprises water-retaining nanoparticles and a catalyst, with a catalyst loading of 0.2-3 mg/cm²;
S5: peeling off a membrane obtained in step S4 from the PE/PET protective film, coating a catalyst ink II onto the wet membrane layer I, followed by dying to obtain a CCM, wherein the catalyst ink II comprises water-retaining nanoparticles and a catalyst, with a catalyst loading of 0.2-1 mg/cm²; and
S6: performing hot-pressing encapsulation on the CCM obtained in step S5 to form the integrated membrane electrode for water electrolysis and fuel cells.

2. The method according to claim 1, **characterized in that**,
in step S1, a thickness of the porous PTFE membrane is 1-10 µm and a porosity is 40-85%; a mass ratio of the water-retaining nanoparticles to the perfluorosulfonic acid resin is 1:1-5, and a spraying loading is 1-10 mg/cm²; a drying temperature to obtain the pretreated reinforcement layer is 40-60 °C ;
in step S2, the PE/PET protective film is placed flat on a vacuum adsorption coating platform at 40-80 °C; and a slurry coating speed is 0.1-5 cm/s;
in step S3, a slurry coating speed is 0.1-5 cm/s;
in step S4, the catalyst in the catalyst ink I is one selected from Pt-based and Ir-based catalysts, a mass ratio of the water-retaining nanoparticles to the catalyst is 1:5-20, with a dispersion agent of an alcohol-water solution; a coating speed is 0.5-5 mm/s, and a coating temperature is 40-90 °C; a concentration of the alcohol-water solution is 1-20 g/L;
in step S5, the catalyst in the catalyst ink II is one selected from Pt-based precious metal catalysts and Pt-based non-precious metal catalysts, a mass ratio of the water-retaining nanoparticles to the catalyst is 1:5-20, with a dispersion agent of an alcohol-water solution; a coating speed is 0.5-5 mm/s, and a coating temperature is 40-90 °C; a concentration of the alcohol-water solution is 1-20g/L; and
in step S6, the CCM obtained in step S5 is subject to hot-pressing encapsulation with a gas diffusion layer and a polyester frame to form the integrated membrane electrode, with a hot-pressing temperature of 70-150 °C.

3. The method according to claim 1, **characterized in that**, in steps S1 to S6, the water-retaining nanoparticles are at least one of TiO₂, ZSM5, and ZSM35 molecular sieves, with a particle size of 1-20 nm.

4. The method according to claim 1, **characterized in that**, in steps S2 and S3, a mass ratio of the water-retaining nanoparticles to the perfluorosulfonic acid resin in the casting membrane slurry is 1:10-200, and a concentration of the perfluorosulfonic acid resin is 2-10 wt%.

5. The method according to claim 1 or claim 4, **characterized in that**, the alcohol in the alcohol-water solution is independently selected from at least one of ethanol, n-propanol, isopropanol, methanol, and n-butanol.

6. The method according to claim 1 or claim 4, **characterized in that**, the perfluorosulfonic acid resin is a long-side-chain resin or a short-side-chain perfluorosulfonic acid resin, wherein the short-side-chain perfluorosulfonic acid resin has a molecular structure selected from at least one of 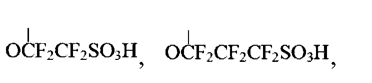 and

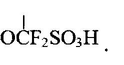

7. An integrated membrane electrode for water electrolysis and fuel cells obtained by the preparation method according to any of claims 1 to 6.

8. An application of the integrated membrane electrode according to claim 7 as a membrane electrode in water electrolyzers or fuel cells.

9. The application according to claim 8, **characterized in that**, the fuel cell is a high-temperature proton exchange membrane fuel cell operating at 100-150 °C in an anhydrous system and with low-humidity inlet gas; and the water electrolyzer is a high-temperature PEM electrolyzer.
